# EUROPÄISCHE PATENTANMELDUNG

(11) **EP 1 081 488 A2**
(43) Veröffentlichungstag der Anmeldung: **07.03.2001**
(21) Anmeldenummer: 00119021.4
(22) Anmeldetag: 01.09.2000
(51) Int. Cl.: G01N 21/74

(54) **Elektrothermischer Ofen für ein Atomabsorptionsspektrometer**

(30) Priorität: 02.09.1999 DE 19941874
(71) Anmelder: Perkin Elmer Bodenseewerk Zweigniederlassung der Berthold GmbH & Co. KG, 88662 Überlingen (DE)
(72) Erfinder: Frech, Wolfgang, Dr., 90738 Umea (SE); Lundmark, Lars, 93796 Bygdsiljum (SE); Radziuk, Bernhard, 88699 Frickingen (DE); Tamm, Rolf, 88682 Salem (DE)
(74) Vertreter: Grünecker, Kinkeldey, Stockmair & Schwanhäusser Anwaltssozietät

(57) **Zusammenfassung**

Die vorliegende Erfindung betrifft einen themoelektrischen Ofen für ein Atomabsorptionsspektrometer zum Überführen einer zu untersuchenden Probe in den atomisierten Zustand mit einem mit einem ersten Elektrodenpaar verbundenen ersten hohlkörperförmigen Ofenteil mit einer ersten Öffnung zur Einführung der Probe und einem mit einem zweiten Elektrodenpaar verbundenen zweiten hohlkörperförmigen Ofenteil mit einer zweiten Öffnung zur Einführung der Probe. Dieser Ofen zeichnet sich dadurch aus, dass der erste Ofenteil und der zweite Ofenteil jeweils an einer Halterung angebracht sind, die derart zwischen einer ersten und einer zweiten Position bewegbar sind, dass in der ersten Position der erste Ofenteil mit der Probe beschickbar ist und dass in der zweiten Position die Öffnungen des ersten und zweiten Ofenteils derart zueinander ausgerichtet sind, dass die Probe von dem ersten Ofenteil in den zweiten Ofenteil überführbar ist, wobei in der zweiten Position ein zur elektrischen und thermischen Entkopplung notwendiger Abstand zwischen dem ersten Ofenteil und dem zweiten Ofenteils reproduzierbar festgelegt ist.

## Beschreibung

Die Erfindung betrifft einen elektrothermischen Ofen für ein Atomabsorptionsspektrometer zum Überführen einer zu untersuchenden Probe in den atomisierten Zustand mit einem mit einem ersten Elektrodenpaar verbundenen ersten hohlkörperförmigen Ofenteil mit einer ersten Öffnung zur Einführung der Probe und einem mit einem zweiten Elektrodenpaar verbundenen zweiten hohlkörperförmigen Ofenteil mit einer zweiten Öffnung zur Einführung der Probe.

Ein derartiger elektrothermischer Ofen ist im Stande der Technik wohlbekannt. Die Vorteile bei der spektroskopischen Analyse durch einen zweigeteilten elektrothermischen Ofen in der Art, wie er oben beschrieben wurde, sind in der Literatur ebenfalls ausführlich dargestellt. Ein entsprechender zweiteiliger Ofen, der auch als "Zwei-Schritt-Ofen" bezeichnet wird, besteht aus einer Graphitröhre, die unmittelbar über einem Graphitbehälter, welcher die Probe aufnimmt, angeordnet ist. In der Röhrenoberfläche, die dem Behälter gegenüberliegt, ist eine Öffnung vorgesehen, die zur Position des Behälters ausgerichtet ist und mit dessen Durchmesser übereinstimmt, wobei jedoch die Graphitröhre und der Behälter voneinander beabstandet sind. Die Graphitröhre und der Behälter sind getrennt beheizbar, wobei üblicherweise zunächst die Graphitröhre auf die gewünschte hohe Betsiebstemperatur gebracht wird und anschließend der die Probe enthaltende Behälter aufgeheizt wird. Die diversen Komponenten der Probe gelangen nach dem Verdampfen aufgrund thermischer Bewegung der Atome über die Öffnung in die Graphitröhre. Dabei treten infolge des Spaltes zwischen der Graphitröhre und dem Probenbehälter Verluste durch aus dem Spalt austretende Atome auf, wodurch die Effizienz der Analyse beeinträchtigt wird. Um reproduzierbare Analysebedingungen zu schaffen, werden die Positionen der Graphitröhre und des Behälters mechanisch fixiert. Auf diese Weise wird auch die relative Lage der beiden Ofenteile zueinander festgelegt. In dieser Anordnung wird die Probe mittels einer geeigneten automatischen Vorrichtung über eine an der zugänglichen Oberseite der Graphitröhre liegenden Dosieröffnung dem Behälter zugeführt. Diese Dosieröffnung verringert allerdings die Empfindlichkeit des Spektrometers aufgrund herausdiffundierender Probenatome. Ferner ist die Ausrichtung der automatischen Vorrichtung zur Probeneinführung schwierig. Weiterhin ist mit dem beispielhaften bekannten elektrothermischen Ofen das Ausführen der spektroskopischen Analyse mit erhöhtem oder verringerten Umgebungsdruck nur mit einer manuellen Probeneinführung unter Verwendung einer klobigen und komplexen Vakuumbzw. Pumpeinrichtung möglich.

Aufgabe der vorliegenden Erfindung ist es, den bekannten elektrothermischen Ofen hinsichtlich der zuvor genannten Beschrankungen zu verbessem.

Diese Aufgabe wird für einen elektrothermischen Ofen der eingangs genannten Art dadurch gelöst, dass der erste Ofenteil und der zweite Ofenteil jeweils an einer Halterung angebracht sind, die derart zwischen einer ersten und einer zweiten Position bewegbar sind, dass in der ersten Position der erste Ofenteil mit der Probe beschickbar ist und dass in der zweiten Position die Öffnungen des ersten und zweiten Ofenteils derart zueinander ausgerichtet sind, dass die Probe von dem ersten Ofenteil in den zweiten Ofenteil überführbar ist, wobei in der zweiten Position ein zur elektrischen und thermischen Entkopplung notwendiger Abstand zwischen dem ersten Ofenteil und dem zweiten Ofenteil reproduzierbar festgelegt ist.

Durch den erfindungsgemäßen Aufbau des elektrothermischen Ofens kann der erste Ofenteil mit einer Probe beschickt werden, wenn die Halterungen, die jeweils den ersten und zweiten Ofenteil aufnehmen, sich in der zweiten Position befinden. Somit ist eine zusätzliche Dosieröffnung mit den damit verbundenen Nachteilen, wie dies im Stand der Technik der Fall ist, unnötig. Ferner gewährleistet die zweite Position der Halterungen, dass die mechanische Fixierung der Ofenteile reproduzierbar ist. Es sind somit reproduzierbare Analysebedingungen sowohl hinsichtlich des den zweiten Ofenteil durchdringenden Lichtstrahls als auch den thermischen Transport der atomisierten Probenkomponenten betreffend gegeben. Ein weiterer Vorteil des erfindungsgemäßen elektrothermischen Ofens besteht darin, dass durch die genaue und reproduzierbare Festlegung der Halterung in der zweiten Position ein zur elektrischen und thermischen Entkopplung notwendiger Abstand zwischen dem ersten und dem zweiten Ofenteil minimiert werden kann, wodurch die Empfindlichkeit des Spektrometers im Vergleich zum Stand der Technik verbessert ist.

Vorteilhafterweise sind die Halterungen jeweils zueinander drehbar oder schwenkbar oder linear oder in einer beliebigen Kombination davon lediglich auf einem Weg geführt bewegbar ausgebildet.

Dies hat den Vorteil, dass die Halterungen durch leicht herstellbare Elemente, wie beispielsweise Drehgelenke oder Schienen relativ zueinander bewegbar sind.

In einer bevorzugten Ausführungsform der Erfindung ist eine der Halterungen mit einem Antnebselement zur automatischen Überführung des ersten und zweiten Ofenteils jeweils in die erste und zweite Position verbunden.

Dadurch ist es möglich, den Beschickungsvorgang unter Beibehaltung der mechanischen Genauigkeit zu automatisieren und damit die Anzahl der analysierten Proben pro Zeiteinheit zu erhöhen.

Vorteilhafterweise umfasst das Antriebselement eine pneumatische oder eine elektrische Antnebseinheit. Somit kann in einfacher und kostengünstiger Weise eine Atomisierung mittels einer einfachen Ansteuereinrichtung, die Bediener- wie auch programmgesteuert sein kann, verwirklicht werden.

In weiterer bevorzugter Ausgestaltung sind der erste Ofenteil in einer ersten Vertiefung in einer der Halterungen und der zweite Ofenteil in einer zweiten Vertiefung in der anderen Halterung angeordnet, wobei die erste und die zweite Vertiefung in der zweiten Position einen kombinierten Hohlraum bilden, der zur Umgebung gasdicht abgeschlossen ist.

Diese Anordnung weist den Vorteil auf, dass der erste und zweite Ofenteil mit einem verringerten oder einem erhöhten Druck beaufschlagt werden können, und damit die Analyse der Probe unter gewünschten Druckbedingungen durchgeführt werden kann, ohne dass eine klobige und komplexe Vakuum- bzw. Pumpvorrichtung notwendig ist.

Vorteilhafterweise umfassen die Halterungen ein Abstandselement, um die zweite Position mechanisch zu definieren. Auf diese Weise lässt sich der notwendige Abstand zwischen dem ersten und dem zweiten Ofenteil sowie die Ausrichtung der ersten und zweiten Öffnung einfach gestalten.

In weiterer bevorzugter Ausgestaltung umfasst das Abstandselement einen die erste Vertiefung begrenzenden, erhabenen Ring mit einer Dichtung auf einer der Halterungen und eine dem erhabenen Ring mit der Dichtung entsprechenden Aussparung auf der anderen Halterung.

Vorteilhaft dabei ist, dass die mechanische Position der beiden Halterungen zueinander und damit die Lage der beiden Öffnungen einerseits durch die Dichtung auf dem erhabenen Ring in radialer Richtung gewahrleistet und andererseits der Abstand zwischen dem ersten und dem zweiten Ofenteil festlegt ist, während die Dichtung gleichzeitig den ersten und den zweiten Ofenteil zur Umgebung hin gasdicht abschließt.

In einer weiteren Ausführungsform umfasst das Abstandselement einen Führungsstift auf einer der Halterungen und eine zum Führungsstift passgenaue Führungsbuchse auf der anderen Halterung. Der Vorteil dieser Anordnung besteht in der einfachen und preiswerten Herstellbarkeit des Abstandselements.

Vorteilhafterweise umfasst entweder die erste oder die zweite Vertiefung mindestens eine Fluidzugangsöffnung. Auf diese Weise lässt sich die zu analysierende Probe mit Über- bzw. Unterdruck beaufschlagen, und es ist weiterhin möglich, zusätzliche Gase, wie beispielsweise Argon, in den ersten und/oder zweiten Ofenteil einzuführen.

In weiterer vorteilhafter Ausgestaltung sind das erste Elektrodenpaar mit einer der Halterungen und das zweite Elektrodenpaar mit der anderen Halterung gasdicht verbunden. Diese Anordnung erlaubt die Verwendung diskreter, auswechselbarer Elektroden, wobei gleichzeitig ein gasdichter Abschluss des ersten und zweiten Ofenteils zur Umgebung hin möglich ist.

Vorteilhafterweise umfassen die Halterungen ein Kühlelement.

Im folgenden wird die Erfindung detailliert anhand von einem in den Zeichnungen dargestellten bevorzugten Ausführungsbeispiel erläutert. Es zeigen:
- Figur 1: eine perspektivische dreidimensionale Ansicht einer bevorzugten Ausführungsform der Erfindung;
- Figuren 2a und 2b: jeweils eine Detailansicht der in Figur 1 gezeigten Ausführungsform;
- Figur 3: einen schematischen Querschnitt durch die in Figur 1 dargestellte Ausführungsform; und
- Figur 4: einen schematischen Querschnitt der in Figur 1 dargestellten Ausführungsform mit den in den Figuren 2a und 2b gezeigten Details.

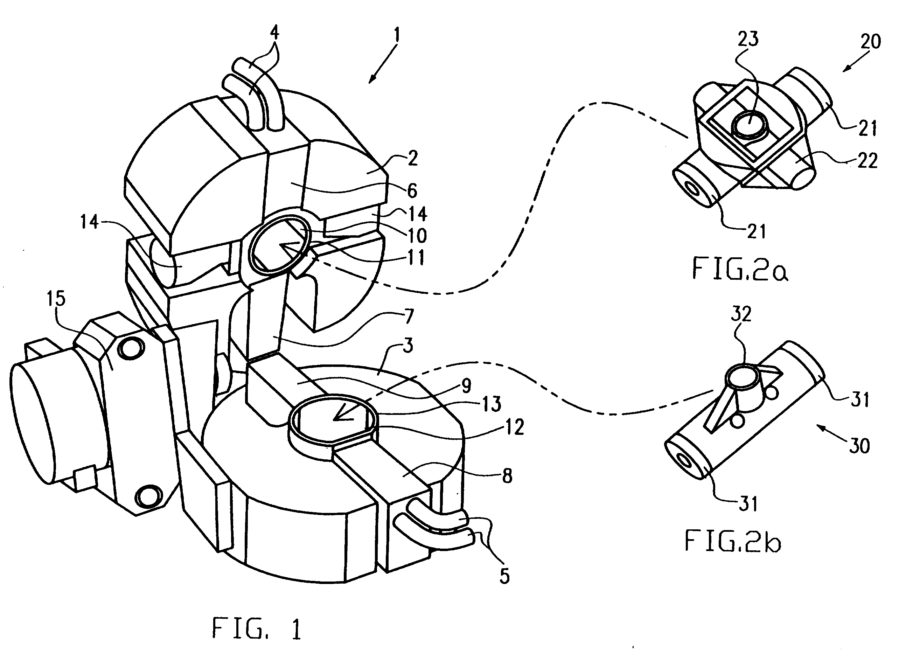

Figur 1 zeigt eine Perspektive einer dreidimensionalen Ansicht der bevorzugten Ausführungsform der Erfindung. Bezugsziffer 1 bezeichnet den erfindungsgemäßen elektrothermischen Ofen in einer ersten Position, die das Beladen des Ofens 1 mit einer Probe zulässt. In Figur 1 sind jeweils Halterungen 2 und 3 in einem Winkel zueinander verkippt dargestellt. Die Halterung 2 weist die Elektrodenblöcke 6 und 7 auf, wobei an der Elektrode 6 die Kühlwasseranschlüsse 4 vorgesehen sind. Analog dazu weist die Halterung 3 die Elektrodenblöcke 8 und 9 auf, wobei an der Elektrode 8 Kühlwasseranschlüsse 5 vorgesehen sind. In dieser Ausführungsform sind sowohl die Halterungen 2 und 3 wie auch die Elektrodenblöcke 6, 7 und 8, 9 einheitlich aus dem gleichen Material, wie beispielsweise Messing, hergestellt. Es können aber auch unterschiedliche Materialkomponenten für die Halterung und die Elektroden verwendet werden. Elektrisch und thermisch gut leitenden Materialien ist dabei der Vorzug zu geben. In der Mitte der Halterung 2 befindet sich eine zylinderförmige Vertiefung 10, die radial durch einen Rand 11 begrenzt ist. In analoger Weise besitzt die Halterung 3 in der Mitte einen zylinderförmigen Hohlraum 12, der radial von einem Rand 13 begrenzt ist, der an seiner Oberkante mit einer Dichtung versehen ist. Ferner sind in der Halterung 2 die Elektroden 6 und 7 sowie der Rand 11 im Vergleich zu der in Figur 1 nach vorne zeigenden Oberfläche der Halterung 2 nach hinten versetzt. Die Elektroden 8 und 9 sowie der Rand 13 sind dagegen zu der in Figur 1 nach oben zeigenden Oberfläche der Halterung 3 nach oben hervortretend. Die Halterung 2 wird durch die Vertiefung 10 und sich jeweils um 180° gegenüberliegenden Röhren 14 in zwei Bereiche unterteilt. Die Röhren 14 sind mit der Vertiefung 10 verbunden und nach außen jeweils mit Quarzfenstern und geeigneten wärmebeständigen O-Ringen abgedichtet. Die Röhren 14 bilden zusammen mit der Vertiefung 10 die optische Achse für den die Probe analysierenden Lichtstrahl. Die Halterungen 2 und 3 sind mit einer Drehantriebseinheit 15 verbunden, deren Drehachse in diesem Ausführungsbeispiel parallel zur optischen Achse ist.

Bei Ansteuerung der Drehantriebseinheit 15 wird die Halterung 2 von der in Figur 1 gezeigten ersten Position in eine zweite Position so überführt, dass die sich jeweils gegenüberliegenden Oberflächen der Halterungen 2 und 3 parallel und beabstandet sind und damit die zweite Position des elektrothermischen Ofens bilden. Die exakte Position der Halterungen 2 und 3 zueinander wird dabei durch die im Rand 13 integrierte Dichtung, die aus einem elektrisch isolierenden Material besteht, gewährleistet.

Figur 2a zeigt eine perspektivische Ansicht eines zweiten Ofenteils 20, der in der Vertiefung 10 in der Halterung 2 angebracht ist. Der zweite Ofenteil 20, der aus Graphit hergestellt ist, weist Elektrodenanschlüsse 21 auf, die es gestatten, eine Probennachweisröhre 22, durch die der Lichtstrahl wahrend der Analyse in axialer Richtung verläuft, in Querrichtung zu beheizen. Ferner weist der zweite Ofenteil 20 eine zweite Öffnung 23 auf, die mit der Probennachweisröhre 22 in Verbindung steht.

Figur 2b zeigt eine perspektivische Ansicht eines ersten Ofenteils 30, das in dem zylinderförmigen Hohlraum 12 der Halterung 3 montiert ist. Der aus Graphit hergestellte Ofenteil weist Elektrodenanschlüsse 31 an jeweils beiden Enden auf. An der Außenwand des ersten Ofenteils 30 ist ein einen zylinderförmigen Innenraum bildender Tiegel 32 angebracht. Der Tiegel 32 ist vorzugsweise so ausgeführt, dass sich bei einem Stromfluss durch den Tiegel 32 eine gleichmäßige Temperaturverteilung ergibt. In der in Figur 1 gezeigten ersten Position kann der Tiegel 32 in einfacher Weise mit einer festen oder flüssigen Probe beschickt werden, In der zweiten Position, wenn die Halterungen 2 und 3 zueinander parallel sind, sind der zweite Ofenteil 20 und der erste Ofenteil 30 mit geringem Abstand so zueinander ausgerichtet, dass die Öffnung des Tiegels 32 mit der zweiten Öffnung 23 fluchtet.

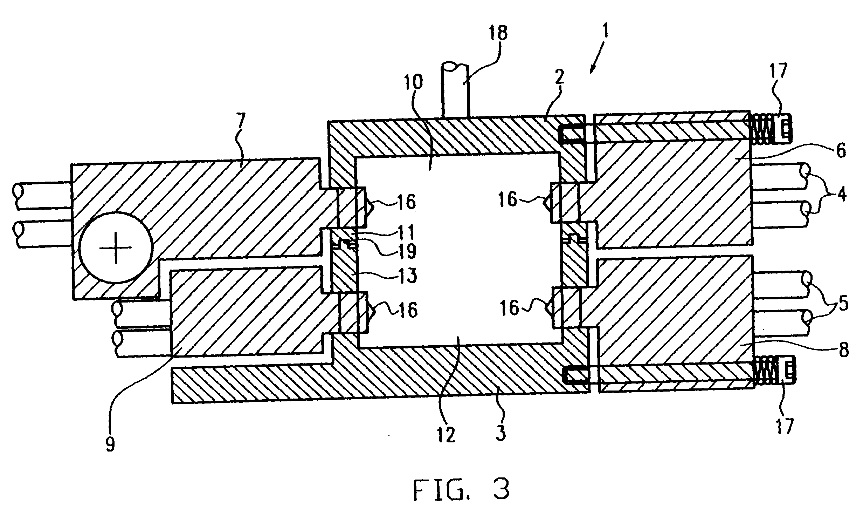

Figur 3 zeigt schematisch einen Querschnitt durch die in Figur 1 gezeigte Ausführungsform entlang der Elektroden 8, 9 und 6, 7, wenn der Ofen 1 sich in der zweiten Position befindet. Die Figur zeigt die Anordnung ohne den ersten und zweiten Ofenteil 30, 20. In der Figur 3 werden zur Figur 1 identische Teile mit gleichen Bezugsziffern belegt. In Figur 3 weisen die Elektroden 6, 7 und 8, 9 jeweils in der radial nach innen weisenden Richtung bezüglich der Halterungen 2 und 3 Graphitanschlüsse 16 auf. Ferner weisen die Elektroden 6 und 8 neben den Kühlwasseranschlüssen 4 und 5 mit Federn versehene Einstellschrauben 17 auf. Die Einstellschrauben 17 beaufschlagen die beweglichen Elektroden 6 und 7 mit einer mechanischen Vorspannung und ermöglichen das Zurückweichen der Elektroden 6 und 7, sofern diese mit einer die Vorspannung übertreffende Druckkraft beaufschlagt werden. Weiterhin bilden die Vertiefung 10 zusammen mit dem zylindrischen Hohlraum 12, dem Rand 13 und der Begrenzung 11 ein Volumen, das durch eine Dichtung 19 gegenüber der Umgebung gasdicht abgeschlossen ist. Die Dichtung 19, die als wärmebeständiger O-Ring aus elektrisch isolierendem Material ausgebildet ist, verhindert gleichzeitig den direkten mechanischen Kontakt zwischen dem Rand 11 und dem Rand 13. Ferner sind die Elektroden 6, 7 und 8, 9 jeweils zu dem aus der Vertiefung 10 und dem zylindrischen Hohlraum 12 gebildeten Volumen mit geeigneten Dichtungen (in Figur 3 nicht gezeigt) gasdicht abgesctlossen. Ferner ermöglicht es ein Anschlussstutzen 18, das Volumen, das durch die Vertiefung 10 und den zylindrischen Hohlraum 12 gebildet wird, mit Unter- bzw. Überdruck zu beaufschlagen. Gegebenenfalls können weitere Stutzen vorgesehen sein, die beispielsweise das Zuführen eines Gases ermöglichen. Alternativ kann eine Gaszufuhr auch durch die Elektroden erfolgen. Die Drehachse des Drehantnebs 15, der in Figur 3 nicht dargestellt ist, wird durch die Markierung in der Elektrode 7 gekennzeichnet.

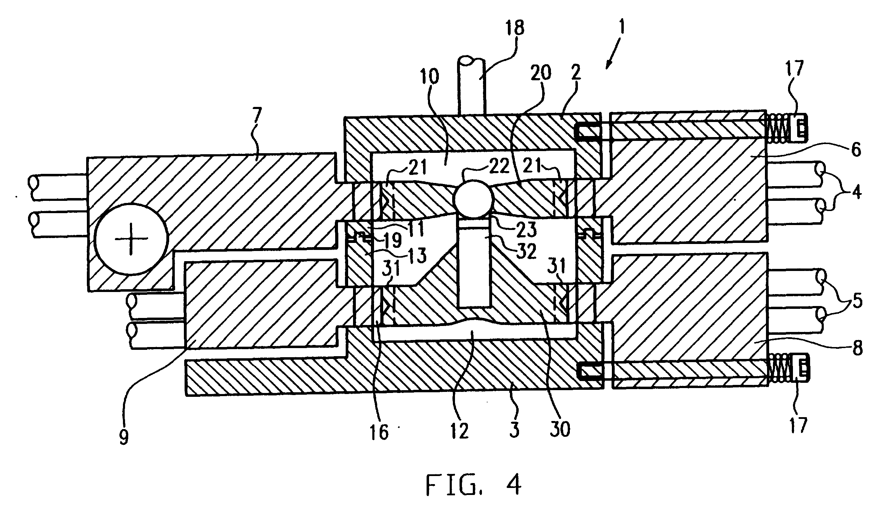

Figur 4 zeigt schematisch die mit Bezug zu Figur 3 beschriebene Anordnung, wobei allerdings der erste Ofenteil 30 jeweils mit den Elektrodenanschlüssen 31 zwischen den Elektroden 9 und 8 mittels der Elektrodenanschlüsse 16 und der zweite Ofenteil 20 an den Elektrodenanschlüssen 21 mittels der Elektrodenanschlüsse 16 zwischen den Elektroden 6, 7 gehaltert sind. In der in Figur 4 gezeigten Position der Halterungen 2 und 3, die der zweiten Position entspricht, fluchtet die Öffnung des Tiegels 32 mit der zweiten Öffnung 23 des zweiten Ofenteils 20. Aufgrund der beweglichen Elektroden 6 und 7 kann die thermische Ausdehnung des ersten und zweiten Ofenteils kompensiert werden.

Beim Betrieb des Ofens 1 wird der Ofen zunächst durch Drehung der Halterung 2 um die Drehachse der Antriebseinheit 15 gedreht, bis die in Figur 1 gezeigte erste Position erreicht ist. In dieser Stellung kann automatisch oder manuell der Tiegel 32 des ersten Ofenteils 30 in einfacher Weise mit einer Probe beschickt werden. Das Dosieren der Probe in dem erfindungsgemäßen Ofen ist in einfacher Weise durchführbar, da durch den Tiegel 32 eine große Öffnung bereitsteht. Dies ist insbesondere für feste Proben von Vorteil. Anschließend wird entsprechend einer beispielhaften konventionellen Zwei-Stufen-Betriebsweise durch Ansteuern der Antriebseinheit 15, das durch Tastendruck oder programmgesteuert geschehen kann, der Ofen 1 in die in den Figuren 3 und 4 dargestellte zweite Position gedreht. Anschließend wird vorteilhafterweise zunächst eine Spannung an die Elektroden 6 und 7 angelegt. Durch den dabei entstehenden Stromfluss wird die Probennachweisröhre 22, deren Längsachse in Figur 4 senkrecht zur Zeichenebene steht, quer zur Längsachse auf eine hohe, konstante Betriebstemperatur aufgeheizt. Anschließend wird durch Anlegen einer zweiten Spannung an die Elektroden 8 und 9 der erste Ofenteil aufgeheizt. Dies kann je nach gewünschtem Analysevorgang in verschiedenen Abstufungen stattfinden. Da der Abstand zwischen der zweiten Öffnung 23 und der Öffnung des Tiegels 32 in dieser Ausführungsform auf 0,5 bis 1 mm eingestellt ist, bleiben die Verluste aufgrund herausdiffundierender Atome gering. Dieser Abstand bleibt durch die Dichtung 17 während des wiedertiolten Beschickens mit diversen Proben reproduzierbar konstant, so dass für jeden Analysevorgang konstante Bedingungen vorherrschen.

Ferner gestattet-die Erfindung im Gegensatz zu konventionellen Öfen die folgende bevorzugte Betriebsweise. Unmittelbar nach dem Beschicken des Tiegels 32 mit einer Probe in der ersten Position wird eine Spannung an die Elektroden 8 und 9 angelegt, um die Probe im geöffneten Zustand des Ofens 1 zu trocknen. Dabei austretende Komponenten der Probe, die beim Analysevorgang unerwünscht sind, gelangen daher nicht in den zweiten Ofenteil. Nach Überführen des Ofens 1 in die zweite Position kann der zweite Ofenteil auf die gewünschte Betriebstemperatur aufgeheizt werden und durch geeignetes Heizen des ersten Ofenteils wird die Probe entsprechend überführt.

Vorzugsweise kann entsprechend den gewünschten Analysebedingungen durch den Stutzen 18 die Probe mit Unter- bzw. Überdruck beaufschlagt werden. Ferner ist es möglich, über den Stutzen 18 bzw. zusätzliche Stutzen, die in den Figuren nicht gezeigt sind, oder durch die Elektroden, den Tiegel 32 und/oder die Probennachweisröhre 22 mit einem zusätzlichen Gas zu beaufschlagen. Besonders vorteilhaft ist es, beim Reinigen des Ofens, d.h. beim Aufheizen des Ofens ohne Probe, einen Unterdruck anzulegen, um damit das Abdampfen früherer Probenreste zu unterstützen. Im Gegensatz dazu ist bei konventionellen Öfen das ungenügende Reinigen eine häufige Ursache für "Speicher"-Effekte, die somit die Anwendbarkeit der Ofentechnik stark einschränken.

Besonders vorteilhaft lässt sich der errindungsgemäße Ofen bei der Atomabsorptionsspektroskopie mittels kontinuierlicher Strahlung einsetzen. Da die Empfindlichkeit des Spektrometers proportional mit dem Gasdruck aufgrund des reduzierten Herausdiffundierens der Probenatome aus dem Ofen ansteigt, lässt sich der dynamische Bereich bei der Analyse mit einer kontinuierlichen Quelle durch Druckbeaufschlagung im erfindungsgemäßen Ofen deutlich gegenüber konventionellen Öfen, die keinen Betrieb mit unterschiedlichen Gasdrücken zulassen, erweitern.

Die vorliegende Erfindung wurde anhand einer bevorzugten Ausführungsform beschrieben, in der die Halterungen 2 und 3 aus Messing gefertigt sind. Es ist jedoch möglich, jedes Material, das die geforderten elektrischen und thermischen Eigenschaften aufweist, wie etwa Kupfer, Silber, Gold etc. oder entsprechende Verbindungen, zu verwenden. Als Elektrodenanschlüsse der Elektroden 6, 7 und 8, 9 sowie der Elektrodenanschlüsse 21 des zweiten Ofenteils und der Elektrodenanschlüsse 31 des ersten Ofenteils wurde Graphit verwendet. Es ist jedoch denkbar, andere hitzebeständige und stromleitende Materialien zu verwenden. Ferner wurde in der beschriebenen Ausführungsform ein pneumatischer Drehantrieb, der eine hohe reproduzierbare mechanische Genauigkeit bereitstellt, verwendet. Es ist jedoch möglich, andere Antriebe mit entsprechender Genauigkeit, wie beispielsweise elektrische Drehmotoren, Schrittmotoren, Linearmotoren etc. zu verwenden. Die Bewegung, die den Ofen 1 von der ersten Position in die zweite Position überführt, muss nicht notwendigerweise eine Drehbewegung sein. Es können beispielsweise Antriebsmittel bereitgestellt werden, die eine lineare Relativbewegung zwischen den Halterungen 2 und 3 bewirken, beispielsweise ein Anheben bzw. ein Verschieben der Halterungen 2 und 3. Ferner kann die mechanische Ausrichtung der zweiten Öffnung 23 und des Tiegels 32 durch andere als in dieser Ausführungsform beschriebenen Abstandselemente, wie beispielsweise ein Führungsstift mit zugehöriger Führungsbuchse, die teilweise aus elektrisch isolierendem Material bestehen, bewirkt werden. Ferner kann die Einhaltung des genauen Abstandes zwischen dem ersten und zweiten Ofenteil sowie die Ausrichtung der zweiten Öffnung mit dem Tiegel durch das Antriebselement alleine oder in Kombination mit Abstandselementen ohne Führungseigenschaft sichergestellt werden. Die Formgebung des ersten und zweiten Ofenteils ist nicht auf die in den Figuren 2 und 4 dargestellten Formen beschränkt, sondern kann in zweckdienlicher Weise modifiziert sein.

## Patentansprüche

1. Elektrothermischer Ofen (1) für ein Atomabsorptionsspektrometer zum Überführen einer zu untersuchenden Probe in den atomisierten Zustand mit
einem mit einem ersten Elektrodenpaar (31,31) verbundenen ersten hohlkörperförmigen Ofenteil (30) mit einer ersten Öffnung (32) zur Einführung der Probe und
einem mit einem zweiten Elektrodenpaar (21,21) verbundenen zweiten hohlkörperförmigen Ofenteil (20) mit einer zweiten Öffnung (23) zur Einführung der Probe,
**dadurch gekennzeichnet,** dass
der erste Ofenteil (30) und der zweite Ofenteil (32) jeweils an einer Halterung (2,3) angebracht sind, die derart zwischen einer ersten und einer zweiten Position bewegbar sind, dass in der ersten Position der erste Ofenteil (30) mit der Probe beschickbar ist und dass in der zweiten Position die Öffnungen (32,23) des ersten und zweiten Ofenteils (30,20) derart zueinander ausgerichtet sind, dass die Probe von dem ersten Ofenteil (30) in den zweiten Ofenteil (20) überführbar ist, wobei in der zweiten Position ein zur elektrischen und thermischen Entkopplung notwendiger Abstand zwischen dem ersten Ofenteil (30) und dem zweiten Ofenteil (20) reproduzierbar festgelegt ist.

2. Der Ofen nach Anspruch 1, **dadurch gekennzeichnet,** dass die Halterungen jeweils zueinander drehbar oder schwenkbar oder linear oder in einer beliebigen Kombination davon lediglich auf einem Weg geführt bewegbar ausgebildet sind.

3. Der Ofen nach Anspruch 1 oder 2, **dadurch gekennzeichnet,** dass eine der Halterungen mit einem Antriebselement zur automatischen Überführung des ersten und zweiten Ofenteils jeweils in die erste und zweite Position verbunden ist.

4. Der Ofen nach Anspruch 3, **dadurch gekennzeichnet,** dass das Antriebselement eine pneumatische oder eine elektrische Antriebseinheit umfasst.

5. Der Ofen nach einem der vorhergehenden Ansprüche, **dadurch gekennzeichnet,** dass der erste Ofenteil in einer ersten Vertiefung in einer der Halterungen und der zweite Ofenteil in einer zweiten Vertiefung in der anderen Halterung angeordnet sind, wobei die erste und die zweite Vertiefung in der zweiten Position einen kombinierten Hohlraum bilden, der zur Umgebung gasdicht abgeschlossen ist.

6. Der Ofen nach einem der vorhergehenden Ansprüche, **dadurch gekennzeichnet,** dass die Halterungen ein Abstandselement umfassen, um die zweite Position mechanisch zu definieren.

7. Der Ofen nach Anspruch 6, **dadurch gekennzeichnet,** dass das Abstandselement einen die erste Vertiefung begrenzenden, erhabenen Ring mit einer Dichtung auf einer der Halterungen und eine den erhabenen Ring mit der Dichtung entsprechenden Aussparung auf der anderen Halterung umfasst.

8. Der Ofen nach Anspruch 6, d**adurch gekennzeichnet,** dass das Abstandselement einen Führungsstift auf einer der Hatterungen und eine zum Führungsstift passgenaue Führungsbuchse auf der anderen Halterung umfasst.

9. Der Ofen nach Anspruch 5, **dadurch gekennzeichnet,** dass entweder die erste oder die zweite Vertiefung mindestens eine Fluidzugangsöffnung umfasst.

10. Der Ofen nach einem der vorhergehenden Ansprüche, **dadurch gekennzeichnet,** dass das erste Elektrodenpaar mit einer der Halterungen und das zweite Elektrodenpaar mit der anderen Halterung gasdicht verbunden sind.

11. Der Ofen nach einem der vorhergehenden Ansprüche, **dadurch gekennzeichnet,** dass die Halterungen ein Kühlelement umfassen.

12. Verfahren zum Betreiben eines elektrothermischen Ofens in einer Atomabsorptionsspektrometervorrichtung mit den Schritten:
Bereitstellen eines elektrothermischen Ofens mit den Merkmalen gemäß einem der Ansprüche 1 bis 11,
Beschicken des ersten Ofenteils in der ersten Position mit einer Probe,
Aufheizen des ersten Ofenteils durch Anlegen einer geeigneten Spannung an das erste Elektrodenpaar, und
Überführen des ersten und zweiten Ofenteils in die zweite Position.

13. Das Verfahren nach Anspruch 12, **dadurch gekennzeichnet**, dass der erste Ofenteil in der ersten Position auf eine zur Trocknung der Probe geeignete Temperatur aufgeheizt wird.
